Europäisches Patentamt

European Patent Office

Office européen des brevets

(11) Numéro de publication: **0 361 296 B1**

# FASCICULE DE BREVET EUROPEEN

(45) Date de publication de fascicule du brevet: **27.10.93**

(51) Int. Cl.5: **G06K 7/08**, G06K 1/12, G07F 7/02

(21) Numéro de dépôt: **89117374.2**

(22) Date de dépôt: **20.09.89**

(54) **Système pour la lecture et l'encodage d'une piste magnétique portée par un document support, par déplacement manuel du document.**

(30) Priorité: **27.09.88 FR 8812608**

(43) Date de publication de la demande:
**04.04.90 Bulletin 90/14**

(45) Mention de la délivrance du brevet:
**27.10.93 Bulletin 93/43**

(84) Etats contractants désignés:
**AT BE CH DE ES FR GB IT LI NL SE**

(56) Documents cités:
US-A- 3 869 700     US-A- 4 024 379
US-A- 4 225 780     US-A- 4 228 348
US-A- 4 304 992     US-A- 4 507 550

IBM TECHNICAL DISCLOSURE BULLETIN, vol.
22, no. 11, avril 1980, page 4869, New York,
US; J.E. ROHEN: "Bidirectional slot encoder"

(73) Titulaire: **COMPAGNIE GENERALE D'AUTOMA-TISME CGA-HBS Société Anonyme dite**
**12, rue de la Baume**
**F-75008 PARIS(FR)**

(72) Inventeur: **Kevorkian, Jean-Michel**
**12, avenue des Acacias**
**F-91410 Dourdan(FR)**
Inventeur: **Smeets, Jacques**
**20, rue de Montmirault**
**Cerny**
**F-91590 La Ferte Alais(FR)**

(74) Mandataire: **Weinmiller, Jürgen et al**
**Lennéstrasse 9**
**Postfach 24**
**D-82336 Feldafing (DE)**

# Description

La présente invention concerne un système pour la lecture et l'encodage d'une piste magnétique portée par un document support, par déplacement manuel du document.

L'invention s'applique en particulier pour des titres de transport à piste magnétique comportant un message fixe d'identification du titre et un message variable représentatif d'unités de transport. Il s'agit donc dans cette application particulière d'un système de transport à titre à décompte.

Il existe des bornes de péage permettant de traiter de tels titres de transport, ces bornes sont équipées de lecteurs/enregistreurs motorisés, c'est-à-dire que l'usager introduit son titre de transport dans une goulotte ou une fente et que celui-ci est entraîné automatiquement vers le lecteur-enregistreur, le titre étant ensuite restitué, soit par une sortie distincte de l'introduction, soit par l'orifice de l'introduction lui-même après avoir effectué un aller et retour.

Il existe également des bornes de péage où les usagers passent eux-mêmes leur titre de transport dans une glissière conduisant devant un lecteur, mais sans se dessaisir de leur titre. Dans ce dernier cas, le titre de transport est forfaitaire, et il ne s'agit pas d'un titre à décompte et la borne de péage ne comporte qu'un lecteur, mais non pas de tête d'écriture.

En effet, l'écriture nécessite que la densité linéaire des bits du codage magnétique utilisé, soit indépendante de la vitesse et des variations de vitesse de passage du titre de transport devant une tête d'écriture, ceci conduit à une complication lorsque le titre est déplacé manuellement.

Une solution connue consiste à doubler la piste magnétique par une piste magnétique parallèle sur laquelle est enregistré un signal d'horloge, une tête de lecture supplémentaire est ainsi nécessaire pour lire ce signal d'horloge qui permet de synchroniser l'écriture et de la rendre indépendante de la vitesse de passage du titre.

L'invention a pour but de proposer un système à déplacement manuel d'un document support portant une piste magnétique dont une partie est porteuse d'un message fixe et dont une autre partie comporte un message variable, qui ne nécessite pas de piste supplémentaire pourvue d'un signal d'horloge, ni de tête magnétique supplémentaire.

Le système à déplacement manuel présente en effet des avantages. Tout d'abord, il évite une motorisation nécessitant des éléments mécaniques complexes, en outre, il est moins vulnérable au vandalisme.

L'invention a ainsi pour objet un système pour la lecture et l'encodage d'une piste magnétique portée par un document support, par déplacement manuel du document devant des organes de lecture et d'écriture, la piste magnétique comportant une première partie sur laquelle est enregistré un premier message codé fixe, caractéristique du document support, ledit message étant réalisé dans un système de codage auto-porteur de son signal d'horloge, suivi d'une seconde partie réservée à l'inscription d'un second message variable inscrit à chaque passage du document support devant lesdits organes de lecture et d'écriture, caractérisé en ce que le dispositif de lecture-écriture comprend trois têtes magnétiques alignées, dont la première est une tête de lecture, la seconde une tête d'écriture et la troisième une tête de lecture, la tête d'écriture étant reliée à un générateur de signal d'écriture recevant en entrée, d'une part les données dudit message variable à enregistrer sur ladite seconde partie de la piste magnétique ces données étant fournies par un module de traitement (20) recevant des informations de la première tête de lecture (9), et d'autre part un signal d'horloge élaboré par un circuit électronique recevant en entrée les signaux provenant de ladite troisième tête, de lecture, et extrayant le signal d'horloge dudit message codé fixe enregistré sur ladite première partie de la piste magnétique, l'arrivée du signal d'horloge sur le générateur de signal d'écriture déclenchant ladite écriture, la longueur linéaire du message variable étant au plus égale à la longueur du message fixe et la distance séparant la seconde tête magnétique de la troisième tête magnétique étant telle que le déclenchement de l'écriture ne se produise pas avant que la fin du message fixe soit complétement passé devant ladite seconde tête, d'écriture, et telle qu'il reste une longueur suffisante de piste magnétique pour l'enregistrement du message variable, la distance séparant la première tête magnétique de la seconde tête magnétique étant au moins égale à la longueur linéaire du message variable.

Des systèmes pour la lecture et l'encodage d'une piste magnétique sont connus des brevets américains US-A-4 507 550 et US-A-4 228 348.

On va maintenant donner la description d'un exemple particulier de mise en oeuvre de l'invention dans le cas de son application à des titres de transport, en se référant au dessin annexé dans lequel :

La figure 1 représente un support muni d'une piste magnétique utilisé comme titre de transport.

La figure 2 représente schématiquement un système selon l'invention permettant de lire et d'écrire sur la piste magnétique du support représenté figure 1, par déplacement manuel du support devant les organes de lecture et d'écriture.

Les figures 3, 4 et 5 sont des schémas figurant trois positions caractéristiques du support par rapport aux têtes magnétiques au cours de son déplacement manuel devant ces têtes magnétiques.

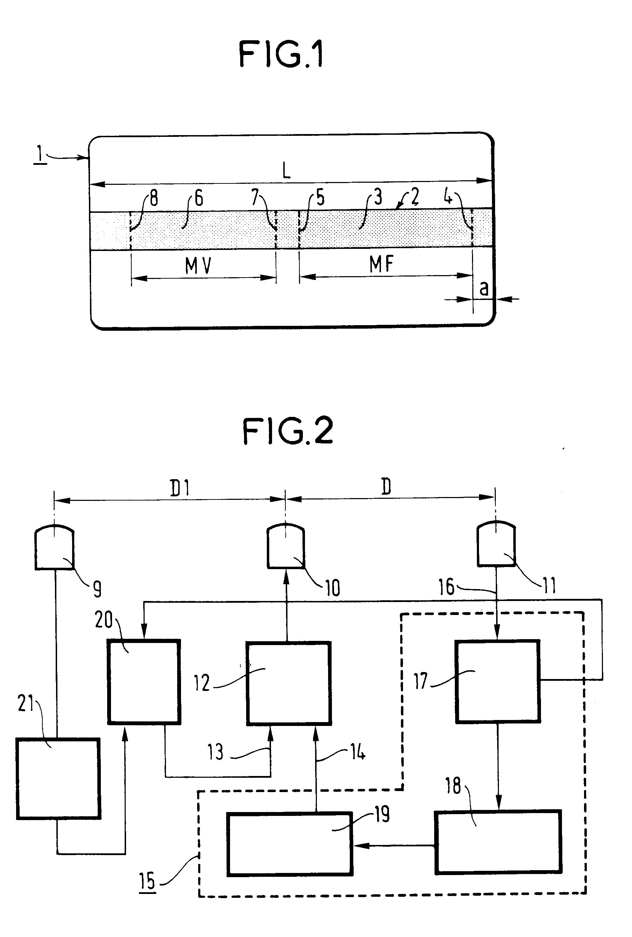

La figure 1 représente un titre de transport 1 qui comporte une piste magnétique 2. Sur cette piste magnétique 2 est enregistré un message fixe invariable sur la partie droite 3 de la piste 2. Les traits verticaux 4 et 5 symbolisent le début et la fin de ce message fixe dont la longueur est symbolisée par les lettres MF. Ce message fixe est un message de validation du titre de transport. Sur la partie gauche 6 de la piste magnétique 2 est enregistré un message variable qui est écrit à chaque passage du titre devant le système de lecture et d'encodage, disposé dans une borne d'accès à une enceinte permettant d'utiliser un moyen de transport. Ce message variable consiste en un code représentant, par exemple, un certain nombre d'unités de transport, ce nombre étant décrémenté à chaque passage devant un tel système. Les traits verticaux 7 et 8 symbolisent le début et la fin de ce message variable dont la longueur est symbolisée par les lettres MV. La lettre L symbolise la longueur totale de la piste magnétique 2 et la lettre a symbolise la longueur de piste avant le début du message fixe. Le message fixe MF est réalisé dans un système de codage auto-porteur de son signal d'horloge, tel que par exemple les codes F/2F ; split phase...

En se reportant à la figure 2, le système de lecture et d'encodage comporte d'abord des organes de lecture et d'écriture comprenant trois têtes magnétiques alignées : une première tête magnétique 9 qui est une tête de lecture, une deuxième tête magnétique 10 qui est une tête d'écriture et une troisième tête magnétique 11 qui est une tête de lecture.

La tête d'écriture 10 reçoit un signal d'écriture produit par un générateur de signal d'écriture 12 qui reçoit, d'une part sur une entrée 13 les données variables à enregistrer sur la portion 6 de la piste magnétique 2, et d'autre part sur une entrée 14 un signal d'horloge d'écriture élaboré par un circuit électronique 15. Les données variables envoyées sur l'entrée 13 sont fournies par un module de traitement 20. Ce module de traitement 20 reçoit des informations d'un module de décodage 21 relié à la première tête de lecture 9. Le circuit électronique 15 reçoit en entrée 16 les signaux provenant de la tête de lecture 11. Il comprend d'abord un module de lecture-décodage 17. Dans ce module, lors du passage du message fixe MF devant la tête de lecture 11, les transitions magnétiques du message fixe enregistrées sur la piste sont lues et décodées, et le signal d'horloge est séparé des données extraites du signal reçu. Le circuit électronique 15 comprend ensuite un module d'analyse-asservissement 18. En fonction de la vitesse de défilement du titre de transport 1 devant la tête de lecture 11, l'écart de temps entre les différents "bits" vu par la tête 11 varie. Le module 18 mesure l'écart de temps entre chaque transition, et recalcule le rythme de base qui servira à établir le signal d'horloge pour l'écriture.

Enfin, le circuit électronique 15 comprend un générateur de signal d'horloge d'écriture 19 qui réalise le signal d'horloge asservi à la vitesse de défilement du titre de transport 1, à partir des éléments de calculs consécutifs à l'analyse réalisée par le module d'analyse-asservissement 18. Le module de lecture-décodage 17 est d'autre part relié au module de traitement 20.

L'arrivée du signal d'horloge d'écriture sur l'entrée 14 du générateur de signal d'écriture 12 déclenche, en présence de données sur l'entrée 13, la génération du signal d'écriture.

L'ensemble du système est disposé dans une borne de passage, les trois têtes magnétiques 9, 10 et 11 étant alignées en face d'une fente longitudinale le long de laquelle l'usager fait glisser manuellement son titre de transport 1.

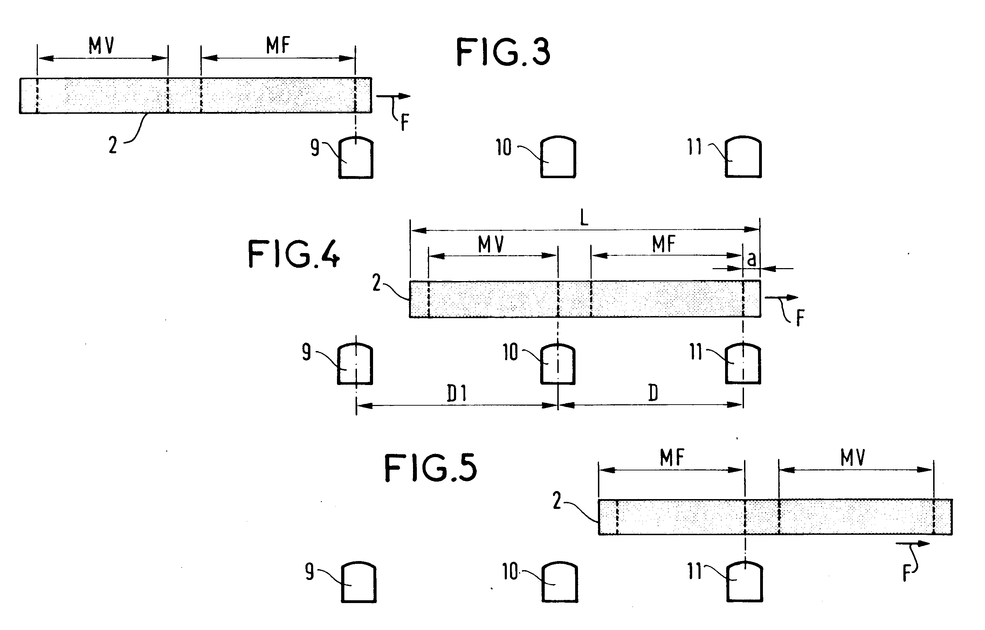

Les figures 3, 4 et 5 montrent différentes étapes du passage du titre devant les têtes magnétiques. Sur ces figures, on n'a figuré que la piste magnétique 2 et les trois têtes magnétiques 9, 10 et 11. La flèche F indique le sens de déplacement du titre porteur de la piste 2.

Dans la position représentée sur la figure 3, la tête de lecture 9 commence à lire le message fixe MF.

Dans la position représentée sur la figure 4, le début du message fixe MF a atteint la tête de lecture 11, ce qui a pour effet de déclencher le fonctionnement de la tête d'écriture 10. Dans cette position, la tête de lecture 9 a terminé sa lecture complète des messages fixe MF et variable MV du titre de transport et le module de traitement 20 peut donc fournir sur l'entrée 13 les nouvelles données à enregistrer.

Enfin, dans la position représentée sur la figure 5, l'écriture du message variable MV est terminée, et la tête de lecture 11 atteint le début du message variable MV nouvellement inscrit qui sera ainsi contrôlé grâce au module de lecture-décodage 17 et de traitement 20.

Pour pouvoir obtenir le signal d'horloge d'écriture, nécessaire à l'écriture du message variable MV, qui est généré grâce à la lecture du message fixe MF par la tête de lecture 11, il est nécessaire que la longueur linéaire du message variable soit au plus égale à la longueur du message fixe. On doit donc avoir MV ≤ MF.

Par ailleurs, la distance D entre la seconde tête magnétique 10 et la troisième tête magnétique 11 doit être telle que le déclenchement de l'écriture ne se produise pas avant que la fin du message fixe soit complétement passé devant la seconde tête 10. Il faut également que cette distance D soit telle qu'il reste une longueur suffisante de piste magnétique 2 pour l'enregistrement complet du message variable. On doit donc avoir : $MF \leq D \leq L - (MV + a)$.

Enfin, afin que les nouvelles données d'écriture puissent être élaborées par le module de traitement 20, il faut que la tête de lecture 9 ait terminé la lecture du message variable MV, il faut donc que la distance $D_1$ entre la tête de lecture 9 et la tête d'écriture 10 soit au moins égale à la longueur MV du message variable.

A titre de sécurité, pour éviter tout risque d'effacement du message fixe par suite d'une mauvaise manipulation du titre de transport devant les têtes magnétiques, un capteur peut valider l'écriture lorsque la tête d'écriture 10 est en bonne position pour écrire.

**Revendications**

1. Système pour la lecture et l'encodage d'une piste magnétique (2) portée par un document support (1), par déplacement manuel du document devant des organes de lecture et d'écriture, la piste magnétique comportant une première partie (3) sur laquelle est enregistré un premier message codé fixe, caractéristique du document support, ledit message étant réalisé dans un système de codage auto-porteur de son signal d'horloge, suivi d'une seconde partie (6) réservée à l'inscription d'un second message variable inscrit à chaque passage du document support devant lesdits organes de lecture et d'écriture, caractérisé en ce que le dispositif de lecture-écriture comprend trois têtes magnétiques alignées, dont la première est une tête de lecture (9), la seconde une tête d'écriture (10) et la troisième une tête de lecture (11), la tête d'écriture (10) étant reliée à un générateur de signal d'écriture (12) recevant en entrée (13), d'une part les données dudit message variable à enregistrer sur ladite seconde partie de la piste magnétique ces données étant fournies par un module de traitement (20) recevant des informations de la première tête de lecture (9), et d'autre part un signal d'horloge (14) élaboré par un circuit électronique (15) recevant en entrée les signaux (16) provenant de ladite troisième tête (11), de lecture, et extrayant le signal d'horloge dudit message codé fixe enregistré sur ladite première partie (3) de la piste magnétique (2), l'arrivée du signal d'horloge (14) sur le générateur de signal d'écriture (12) déclenchant ladite écriture, la longueur linéaire (MV) du message variable étant au plus égale à la longueur (MF) du message fixe et la distance (D) séparant la seconde tête magnétique (10) de la troisième tête magnétique (11) étant telle que le déclenchement de l'écriture ne se produise pas avant que la fin du message fixe soit complétement passé devant ladite seconde tête (10), d'écriture, et telle qu'il reste une longueur suffisante de piste magnétique (2) pour l'enregistrement du message variable, la distance ($D_1$) séparant la première tête magnétique (9) de la seconde tête magnétique (10) étant au moins égale à la longueur linéaire (MV) du message variable.

**Claims**

1. A system for reading and encoding a magnetic track (2) carried by a supporting document (1) which is displaced manually past read and write members, the magnetic track comprising a first portion (3) on which a fixed first encoded message characteristic of the supporting document is recorded, said message being encoded by means of an encoding system which conveys its own clock signal, the first portion of the track being followed by a second portion (6) in which a variable second encoded message is written each time the supporting document goes past said read and write members, the system being characterized in that the read and write members comprise three magnetic heads in alignment, comprising a first head (9) which is a read head, a second head (10) which is a write head, and a third head (11) which is a read head, the write head (10) being connected to a write signal generator (12) having a first input (13) which receives data representative of said variable message to be recorded on said second portion of the magnetic track, the data being supplied by a treatment module (20) receiving information from the first read head (9), and a second input (14) on which it receives a clock signal generated by an electronic circuit (15) having an input (16) on which it receives the signals from the said read third head (11), and serving to extract the clock signal from said fixed encoded message recorded on said first portion (3) of the magnetic track (2), the arrival of the clock signal (14) at the write signal generator (12) triggering said writing, the linear length (MV) of the variable message being no longer than the length (MF) of the fixed message, and the distance (D) between the second magnetic head (10) and the third magnetic head (11) being such that writing is not triggered until the end of the fixed message has gone completely past said write second head (10), and such that there remains a sufficient length of the magnetic track (2) to record the variable message, the distance (D1) between the first magnetic head (9) and the second magnetic head (10) being not less than the linear length (MV) of the variable message.

**Patentansprüche**

1. System zum Lesen und Kodieren einer von einem Trägerdokument (1) getragenen Magnetspur (2) durch manuelle Verschiebung des Dokuments vor Lese- und Schreiborganen, wobei die Magnetspur einen ersten Bereich (3) aufweist, in dem eine für das Trägerdokument charakteristische erste, feste und kodierte Nachricht gespeichert ist, wobei diese Nachricht in einem Kodiersystem erzeugt wird, das sein Taktsignal selber trägt, gefolgt von einem zweiten Bereich (6), der für das Einschreiben einer zweiten, variablen Nachricht reserviert ist, die bei jedem Vorbeilauf des Trägerdokuments vor den Lese- und Schreiborganen eingeschrieben wird, dadurch gekennzeichnet, daß die Lese-Schreib-Vorrichtung drei fluchtende Magnetköpfe aufweist, von denen der erste ein Lesekopf (9), der zweite ein Schreibkopf (10) und der dritte ein Lesekopf (11) ist, wobei der Schreibkopf (10) mit einem Schreibsignalgenerator (12) verbunden ist, der an seinem Eingang (13) einerseits die Daten der auf den zweiten Bereich der Magnetspur zu speichernden variablen Nachricht empfängt, wobei diese Daten von einem Verarbeitungsmodul (20) geliefert werden, das Informationen vom ersten Lesekopf (9) erhält, und andererseits ein Taktsignal (14) erhält, das von einem Elektronikkreis (15) erarbeitet wird, der am Eingang die vom dritten Lesekopf (11) kommenden Lesesignale (16) empfängt, und das Taktsignal der festen kodierten Nachricht, die auf dem ersten Bereich (3) der Magnetspur (2) gespeichert ist, entnimmt, wobei die Ankunft des Taktsignals (14) am Schreibsignalgenerator (12) das Schreiben auslöst, wobei die lineare Länge (MV) der variablen Nachricht höchstens gleich der Länge (MF) der festen Nachricht ist und der den zweiten Magnetkopf (10) vom dritten Magnetkopf (11) trennende Abstand (D) derart ist, daß das Auslösen des Schreibvorgangs nicht geschieht, bevor das Ende der festen Nachricht völlig vor dem zweiten Schreibkopf (10) vorbeigelaufen ist, und derart, das eine ausreichende Länge Magnetspur (2) für das Speichern der variablen Nachricht verbleibt, wobei der Abstand (D₁) zwischen dem ersten Magnetkopf (9) und dem zweiten Magnetkopf (10) mindestens gleich der linearen Länge (MV) der variablen Nachricht ist.

## FIG.1

## FIG.2

FIG.3

FIG.4

FIG.5

EP 0 361 296 B1